# EUROPEAN PATENT APPLICATION

(11) **EP 4 599 922 A1**
(43) Date of publication of application: **13.08.2025**
(21) Application number: 22961496.1
(22) Date of filing: 26.10.2022
(51) Int. Cl.: B01D 53/56

(54) **GAS REMOVAL APPARATUS AND GAS TREATMENT METHOD**

(30) Priority: 05.10.2022 JP 2022160931
(71) Applicant: Kanken Techno Co., Ltd., Nagaokakyo-shi, Kyoto 617-0833 (JP)
(72) Inventor: HATANAKA, Hiroaki, Nagaokakyo-shi, Kyoto 617-0833 (JP); SHIMAMOTO, Shuhei, Nagaokakyo-shi, Kyoto 617-0833 (JP); OKUTANI, Ryohei, Nagaokakyo-shi, Kyoto 617-0833 (JP); MATSUSHITA, Yoshimitsu, Nagaokakyo-shi, Kyoto 617-0833 (JP); OKAMOTO, Hideki, Nagaokakyo-shi, Kyoto 617-0833 (JP); KATO, Yoshihiko, Nagaokakyo-shi, Kyoto 617-0833 (JP); MORIHARA, Atsushi, Nagaokakyo-shi, Kyoto 617-0833 (JP); IMAMURA, Hiroshi, Nagaokakyo-shi, Kyoto 617-0833 (JP)
(74) Representative: HGF
(86) International application number: PCT/JP2022/039907
(87) International publication number: WO 2024/075312

(57) **Abstract**

Provided are a gas abatement apparatus and a gas treatment method that can realize energy saving and that can expand the range of operational conditions. The gas abatement apparatus according to the present invention includes a first reactor 4 and a second reactor 5. The first reactor 4 includes a first reaction space 6 surrounded by a heat wall 7, and the second reactor 5 includes a second reaction space 16 surrounding the heat wall 7. Gas and a reducing agent are introduced from one end side of the first reaction space 6, and the other end side of the first reaction space 6 communicates with the second reaction space 16. Oxygen or a gas including oxygen is introduced into the second reaction space 16.

## Description

### Technical Field

The present invention relates to a gas abatement apparatus and a gas abatement method.

### Background Art

Exhaust gas generated through various industrial processes such as a manufacturing process may include a component that may have an adverse effect on the human body in some cases. For example, N₂O is used as an oxidizing agent or the like in a film formation process in a semiconductor manufacturing plant in some cases. In addition, thermal NOx may be generated through high-temperature treatment such as the combustion of a nitrogen compound. In particular, N₂O is a greenhouse gas having a high global warming potential, and emissions thereof need to be reduced.

As one of exhaust gas abatement apparatuses, an apparatus that thermally decomposes such a harmful component has been known.

### Citation List

### [Patent Literature]

[PTL 1] Japanese Patent No. 7021730
[PTL 2] Japanese Laid-Open Patent Publication No. 2005-125285
[PTL 3] Re-publication of PCT International Publication No. 2008/096466
[PTL 4] Japanese Laid-Open Patent Publication No. 2008-253903

### Summary of Invention

### Technical Problem

For example, in order to thermally decompose nitrous oxide (N₂O) which is a nitrogen oxide, it is necessary to perform thermal treatment at high temperatures. As a result, abatement apparatuses that perform thermal decomposition generally require a large amount of power, leading to a demand for energy-saving solutions.

Some of conventional abatement apparatuses achieve energy saving. However, there is a demand to further expand the range of operational conditions for the abatement apparatus based on various user requests (e.g., further lowering temperatures, etc.) with respect to the abatement apparatus.

The present invention has been made in view of the above-described problem, and an object of the present invention is to provide a gas abatement apparatus and a gas abatement method that can realize energy saving and that can expand the range of operational conditions in order to expand the range of options for users.

### Solution to Problem

A gas abatement apparatus (1) according to the present invention includes:
a first reactor (4); and a second reactor (5).

The first reactor (4) includes a first reaction space (6) surrounded by a heat wall (7),
the second reactor (5) includes a second reaction space (16) surrounding the heat wall (7),
the gas and a reducing agent are introduced from one end side of the first reaction space (6),
another end side of the first reaction space (6) communicates with the second reaction space (16), and
oxygen or a gas including oxygen is introduced into the second reaction space (16).

Since the gas abatement apparatus has such a configuration, the range of available conditions that can accommodate user requests can be expanded by appropriately selecting the reducing agent. In addition, the reducing agent and oxygen react with each other in the second reaction space, and heat from the combustion can be utilized in a reduction reaction in the first reaction space, which can contribute to energy saving.

In the gas abatement apparatus (1) having the above configuration according to the present invention,
the first reactor (4) may include a gas flow regulator (13) in the first reaction space (6).

Since the gas abatement apparatus has such a configuration, the reduction reaction of the gas can be promoted in the first reaction space, which can contribute to improvement in removal efficiency.

In the gas abatement apparatus (1) having the above configuration according to the present invention,
the heat wall (7) may have a straight-tube shape,
the gas flow regulator (13) may include a gas-flow control portion (15), and
the gas-flow control portion (15) may be installed such that a longitudinal direction of the gas-flow control portion (15) is parallel to a longitudinal direction of the heat wall (7).

Since the gas abatement apparatus has such a configuration, the reduction reaction in the first reaction space is promoted by the gas-flow control portion, and the gas flow regulator is easily installed in and removed from the first reactor, thereby improving maintainability.

In the gas abatement apparatus (1) having the above configuration according to the present invention,
the reducing agent may be flammable gas.

Since the gas abatement apparatus has such a configuration, flammable reducing gas is appropriately selected as the reducing agent, and is combusted in the second reactor, and the thermal energy from the combustion can be utilized in the reduction reaction in the first reactor. In particular, when hydrogen is selected as the reducing agent, the treatment temperature can be lowered, the operational temperature range in abatement treatment can also be expanded, and the range of options for users can be expanded.

In the gas abatement apparatus (1) having the above configuration according to the present invention,
the reducing agent may be an organic solvent.

Since the gas abatement apparatus has such a configuration, a request made by a user who does not wish to use flammable gas can also be accommodated.

A gas abatement system (100) according to the present invention includes: the gas abatement apparatus (1); an inlet scrubber (2); and an outlet scrubber (3).

The inlet scrubber (2) communicates with the first reactor (4), and
the outlet scrubber (3) communicates with the second reactor (5).

Since the gas abatement system has such a configuration, the abatement-target component in the gas from which dust, water-soluble components, and the like have been eliminated in the inlet scrubber can be decomposed in the gas abatement apparatus, and the gas can be cooled and diluted as necessary in the outlet scrubber and can be discharged to the atmosphere.

A gas abatement method according to the present invention includes:
a gas introduction step of introducing the gas into the first reactor (4);
a reduction step of mixing the reducing agent and the gas introduced in the first reactor (4), and reducing the gas;
a combustion step of introducing the gas subjected to the reduction step and an excess of the reducing agent into the second reactor (5), and reacting oxygen and the excess of the reducing agent introduced in the second reactor (5); and
a discharge step of discharging the gas subjected to the combustion step from the second reactor (5).

In such a gas abatement method, the range of available conditions that can accommodate user requests can be expanded by appropriately selecting the reducing agent. In addition, the reducing agent and oxygen react with each other in the second reaction space, and heat from the combustion can be utilized in a reduction reaction in the first reaction space, which can contribute to energy saving.

### Advantageous Effects of Invention

The present invention can provide a gas abatement apparatus and a gas abatement method that can realize energy saving and that can expand the range of operational conditions in order to expand the range of options for users.

### Brief Description of Drawings

[FIG. 1] FIG. 1 is a cross-sectional view schematically showing a main configuration of a gas abatement system 100 in which a gas abatement apparatus 1 is used (embodiment 1).
[FIG. 2] FIG. 2(A) is a side view partially showing a configuration of a gas flow regulator 13 installed inside a heat wall 7. FIG. 2(B) is a top view showing the arrangement relationship between the heat wall 7 and a support portion 14 of the gas flow regulator 13, and FIG. 2(C) is a bottom view showing the arrangement relationship between the heat wall 7 and a pipe 9 for supplying reducing gas.
[FIG. 3] FIG. 3(A) is a graph showing the relationship between N₂O removal efficiency and the flow rate of hydrogen. FIG. 3(B) is a graph showing the relationship between cost required for exhaust gas treatment and treatment temperature.
[FIG. 4] FIG. 4 schematically shows a main configuration of a gas abatement system 100 (embodiment 2).
[FIG. 5] FIG. 5(A) is a graph showing the relationship between N₂O removal efficiency and a supply amount of IPA, and FIG. 5(B) is a graph showing the relationship between N₂O removal efficiency and a supply amount of ethanol.
[FIG. 6] FIG. 6(A) is a graph showing the dependency of NF₃ removal efficiency on the flow rate of hydrogen, FIG. 6(B) is a graph showing the dependency of NF₃ removal efficiency on the flow rate of ethanol, and FIG. 6(C) is a graph showing the dependency of NF₃ removal efficiency on the flow rate of isopropyl alcohol (IPA).

### Description of Embodiments

Hereinafter, embodiments according to the present invention will be described with reference to the drawings. However, the following embodiments are not intended at all to provide a limiting interpretation in determining the gist of the present invention. Moreover, the same reference signs may be given to the same or similar members, and the description thereof may be omitted.

Furthermore, the terms such as "parallel", "orthogonal", and "identical", values of lengths or angles, and the like that are used for specifying shapes, geometrical conditions, and the degree thereof in the present specification, shall be interpreted so as to include the range in which a similar function can be expected without being bound by strict meanings.

### (Embodiment 1)

Hereinafter, a gas abatement system 100 according to an embodiment of the present invention will be described.

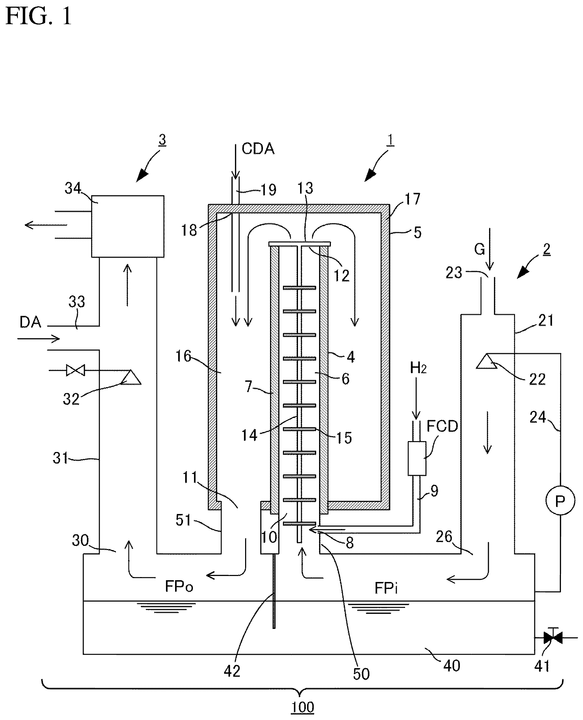

FIG. 1 is a cross-sectional view showing a main configuration of the gas abatement system 100 in which a gas abatement apparatus 1 is used. In FIG. 1, arrows are used to schematically express the flow of gas (for understanding).

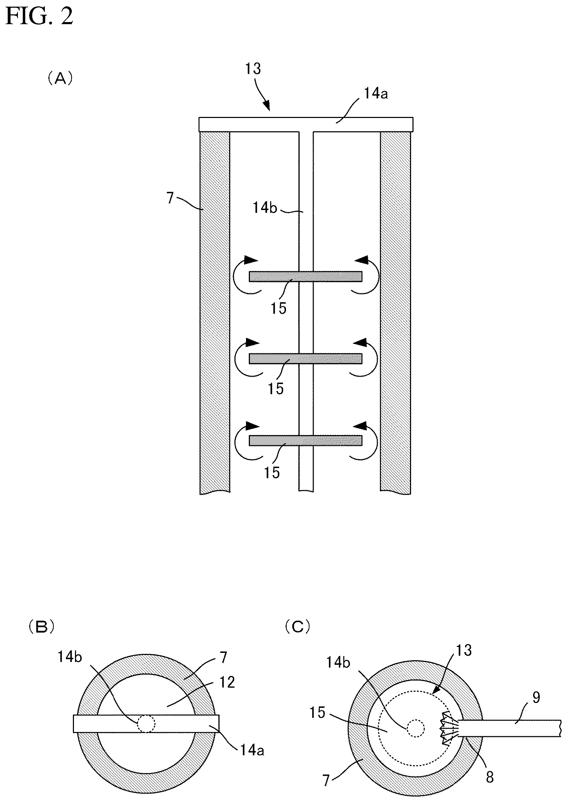

FIG. 2(A) schematically illustrates gas flows around a gas flow regulator 13. FIG. 2(B) is a plan view of a heat wall 7 viewed from above, and shows the arrangement relationship between the heat wall 7 and a support portion 14 of the gas flow regulator 13 in an inner-cylinder-heater-type abatement apparatus, and FIG. 2(C) is a plan view of the heat wall 7 viewed from the bottom side, and shows the arrangement relationship between the heat wall 7 and a pipe 9 for supplying reducing gas.

The gas abatement system 100 includes the gas abatement apparatus 1, an inlet scrubber 2, and an outlet scrubber 3. The gas abatement apparatus 1 performs abatement treatment on treatment-subject gas including nitrogen oxides (N₂O and the like).

In FIG. 1, an example in which the gas abatement apparatus 1, the inlet scrubber 2, and the outlet scrubber 3 are integrally configured is shown, but the gas abatement apparatus 1, the inlet scrubber 2, and the outlet scrubber 3 may be independently configured and connected through a pipe. In a case where the inlet scrubber 2 and the outlet scrubber 3 are independently configured, a known wet scrubber may be used as each of the inlet scrubber 2 and the outlet scrubber 3.

The gas abatement apparatus 1 includes a first reactor and a second reactor, that is, an inner reactor 4 and an outer reactor 5.

The inner reactor 4 includes an inner reaction space 6 (first reaction space), and the inner reaction space 6 is surrounded by an inner wall surface of a heat wall 7 (reaction wall) that has a cylindrical shape open at both ends

The heat wall 7 can be maintained at a predetermined temperature. For example, the heat wall 7 is provided with a heating mechanism (e.g., heating wire), and can be maintained at a desired temperature, for example, a temperature of 700°C to 1000°C (as a non-limiting example).

As a temperature control method, a known technique in which a control device and a thermometer for detecting the temperature of the heat wall 7 are used, for example, PID control or the like, can be utilized.

The surface (inner wall surface and outer wall surface) of the heat wall 7 covers the above-described heating mechanism, is formed of a known refractory and corrosion-resistant material, and has resistance to a chemical reaction in the gas abatement apparatus 1.

The inner reactor 4 is configured to maintain the inner reaction space 6 at a high temperature using the heat wall 7, and, in this respect, it is also conceivable that the inner reactor 4 is substantially a hot-wall type reactor.

As a reducing agent (reducing substance), reducing gas, for example, hydrogen, hydrocarbon gas such as methane, or the like, is supplied from one end side of the inner reaction space 6 (or heat wall 7), via a reducing gas supply port 8 (hereinafter, referred to as gas supply port 8).

The pipe 9 (reducing gas supply line) for supplying the reducing gas is connected to the gas supply port 8, and the reducing gas is transferred to the gas supply port 8 through the pipe 9 from a supply source such as a cylinder (not shown).

The reducing gas is not limited to the above-described examples. As the reducing gas, a flammable gas that allows nitrogen oxides to be decomposed into nitrogen and water and that reacts with oxygen may be used.

In general, it is known that thermal decomposition of nitrogen oxides, for example, N₂O, requires heating to a temperature of 1100°C or higher. However, addition of methane allows nitrogen oxides to be decomposed at a temperature of 900°C, and enables gas treatment at lower temperatures. As described below, the use of hydrogen as an additive gas allows for the gas treatment at an even lower temperature, and N₂O can be decomposed at a temperature of 800°C, for example. From the viewpoint of reduction in power consumption, hydrogen can be used suitably as reducing gas.

Therefore, a temperature range (low-temperature region) applicable to abatement treatment can be expanded, and the temperature selection range for a user of an abatement apparatus is expanded.

In a case where hydrogen is used as reducing gas, a supply line for hydrogen gas is generally provided in, for example, a semiconductor plant or the like, and thus the existing supply line can be repurposed. The reducing gas to be used may be appropriately selected so as to correspond to the facility owned by the user.

The reducing gas supplied from the supply source is transferred through the pipe 9 while the flow rate thereof is controlled by a flow rate control device FCD such as a massflow controller, and is introduced into the inner reaction space 6 via the gas supply port 8 (see FIG. 2(C)).

The gas abatement apparatus 1 is provided with a gas introduction port 10 (treatment-subject gas introduction port) for introducing treatment-subject gas into the inner reaction space 6, and the gas introduction port 10 is located on one end portion side of the inner reaction space 6 (more specifically, heat wall 7).

In the example shown in FIG. 1, the gas supply port 8 is provided on a wall surface of the introduction pipe 50 connected to the one end portion (bottom surface) of the heat wall 7, and reducing gas is supplied from the underside of the one end portion of the heat wall 7 via the gas introduction port 10 into the inner reaction space 6. In this case, the reducing gas is mixed with the treatment-subject gas, and then is introduced into the inner reaction space 6.

The gas supply port 8 may be provided on the wall surface on the one end portion side of the heat wall 7, and the reducing gas may be supplied from the upper side of the gas introduction port 10. The gas supply port 8 only needs to be located on the one end side of the inner reaction space 6 in order to introduce the reducing gas into the inner reaction space 6 and allow the reducing gas to sufficiently react with the treatment-subject gas. Thus, the gas supply port 8 may be located on the introduction pipe 50 connected to the one end portion (bottom surface) of the heat wall 7, or may be located on the wall surface on the one end portion side of the heat wall 7.

The treatment-subject gas may be introduced directly through the gas introduction port 10 into the inner reactor 4 of the gas abatement apparatus 1, or may be supplied via the inlet scrubber 2 into the gas introduction port 10. As the inlet scrubber 2 communicating with the inner reactor 4, a known device may be used.

In the example shown in FIG. 1, the inlet scrubber 2 includes a straight-tube type inlet scrubber body 21 and a nozzle 22 for discharging a liquid.

In order to eliminate dust, water-soluble components, and the like, a chemical liquid such as water is discharged (sprayed) from the nozzle 22 to the treatment-subject gas (represented by G in FIG. 1) introduced in the inlet scrubber body 21 through the gas inflow port 23. The discharged chemical liquid is collected in a chemical liquid tank 40. The collected chemical liquid is delivered by a pump P to the nozzle 22 through a circulation pipe 24.

The chemical liquid tank 40 is provided with a drain valve 41, through which the chemical liquid can be discharged for exchange of the chemical liquid during periodic maintenance, or the like.

The treatment-subject gas subjected to treatment such as dust elimination and the like in the inlet scrubber 2 flows out through a gas outflow port 26 provided to the inlet scrubber body 21, and flows into the inner reactor 4 of the gas abatement apparatus 1 via the gas introduction port 10.

In the example shown in FIG. 1, a space between a chemical liquid surface of the chemical liquid tank 40 and a ceiling surface of the chemical liquid tank 40 is utilized as a passage (inflow passage FPi) from the inlet scrubber 2 to the gas abatement apparatus 1 (inner reactor 4). To ensure communication between the gas outflow port 26 and the gas introduction port 10, a pipe through which gas flows may be separately provided.

As shown in FIG. 1 and FIG. 2(B), a gas outflow port 12 open to an outer reaction space 16 is provided at the other end portion, opposed to the gas introduction port 10, of the inner reactor 4. The other end side of the inner reaction space 6 communicates with the outer reaction space 16.

Therefore, the treatment-subject gas that has flowed in through the gas introduction port 10 moves along the longitudinal direction of the inner reaction space 6 (or heat wall 7) together with the reducing gas introduced through the gas supply port 8, and flows out through the gas outflow port 12 into the outer reaction space 16.

The gas flow regulator 13 is provided in the inner reaction space 6 of the inner reactor 4 of the gas abatement apparatus 1. As shown in FIG. 2(C), the reducing gas introduced through the gas supply port 8 is discharged toward the gas flow regulator 13. The reducing gas may be discharged through the gas supply port 8 so as to flow along the inner wall surface of the heat wall 7.

FIG. 2(A) is a side view partially showing a configuration of the gas flow regulator 13 installed inside the heat wall 7, and schematically illustrates gas flows around the gas flow regulator 13.

As shown in FIG. 2(A), the gas flow regulator 13 includes a T-shaped support portion 14 and a gas-flow control portion 15.

The support portion 14 includes a head portion 14a and a shaft portion 14b.

The head portion 14a is mounted on the gas outflow port 12 of the heat wall 7 so as to be in contact with the surface of the upper end portion of the heat wall 7 (see FIG. 2(A), FIG. 2(B)).

The heat wall 7 is formed so as to have a straight-tube-type shape, and the shaft portion 14b is formed in a linear bar shape, whereby the shaft portion 14b can be easily inserted inside the heat wall 7.

The length in the longitudinal direction of the head portion 14a is longer than the inner diameter of the heat wall 7, and the shaft portion 14b of the support portion 14 is suspended in the inner reaction space 6 using the head portion 14a. The shaft portion 14b is provided in parallel to the longitudinal direction of the inner reaction space 6, from the gas outflow port 12 toward the gas introduction port 10.

Such a configuration facilitates the installation and removal of the gas flow regulator 13 inside and from the heat wall 7. For example, the gas flow regulator 13 removed from the inner reactor 4 may be easily installed again after washing, which can enhance maintainability.

The gas-flow control portion 15 is fixed to the shaft portion 14b. In the illustrated example, components of the gas-flow control portion 15 are arranged in a direction parallel to the longitudinal direction of the heat wall 7.

The reducing gas that has flowed in via the gas supply port 8 through the pipe 9 flows toward the gas-flow control portion 15, and is further mixed with the treatment-subject gas, to become a mixed gas. As described below, the mixed gas of the treatment-subject gas and the reducing gas is stirred through the gas-flow control portion 15.

The mixed gas obtained by mixing the treatment-subject gas and the reducing gas flows from the gas introduction port 10 toward the gas outflow port 12 in the inner reaction space 6.

The gas-flow control portion 15 of the gas flow regulator 13 provided in the inner reaction space 6 partially blocks the linear flow (or laminar flow) of the mixed gas from the gas introduction port 10 to the gas outflow port 12.

For example, as shown in FIG. 2(A), the flow of the mixed gas is blocked partially by the gas-flow control portion 15, and convoluted flows (turbulence) occur due to swirls or the like as indicated by arrows in FIG. 2(A), for example.

Thus, the mixed gas stays in the inner reaction space 6 for a longer time, and mixing of the reducing gas and a decomposition-target component in the treatment-subject gas is also further promoted, and the decomposition reaction of the decomposition-target component is promoted. As a result, this can contribute to reduction in the decomposition temperature of nitrogen oxides in the inner reaction space 6.

Alternatively, the gas flow regulator 13 can contribute to shortening the length, required for a reduction reaction, in the longitudinal direction of the inner reaction space 6 (heat wall 7). The gas flow regulator 13 can contribute to energy saving and downsizing of the gas abatement apparatus 1.

As long as the gas flow regulator 13, particularly, the gas-flow control portion 15, is configured to at least partially block the laminar flow of the mixed gas in the inner reaction space 6, various shapes may be applied thereto.

In a case where hydrogen is used as an example of the reducing gas, nitrogen oxides and hydrogen are converted into nitrogen and water in the inner reactor 4 according to the following reactions, for example.

N₂O+H₂ → N₂+H₂O(+NO+NO₂)

2NO+2H₂ → N₂+2H₂O

2NO₂+4H₂ → N₂+4H₂O

In a case where hydrocarbon such as methane is used as the reducing gas, carbon dioxide is further generated.

The gas subjected to reduction treatment in the inner reactor 4 flows via the gas outflow port 12 to the outer reactor 5 that houses the inner reactor 4. The introduced reducing gas is consumed through the reduction reaction, but an excess of the reducing gas, which has not contributed to reduction of the nitrogen oxides, remains.

Since the reducing gas (e.g., hydrogen or hydrocarbon) is flammable gas, the remaining excess of the reducing gas is subjected to combustion treatment in the outer reactor 5, as described below.

The outer reactor 5 includes the outer reaction space 16 (second reaction space), and the outer reaction space 16 is surrounded by a heat-insulating wall 17. The outer reaction space 16 is configured to surround the outer wall surface of the heat wall 7 of the inner reactor 4.

Unlike the inner reactor 4, the outer reactor 5 is configured such that thermal energy is supplied from the heat wall 7 provided inside the outer reactor 5.

Oxygen or a gas including oxygen (e.g., air) is supplied to the outer reaction space 16 via a pipe 19 provided at an intake port 18. For example, dry air (represented by DA in FIG. 1) is fed by using a blower or the like (not shown), whereby oxygen can be supplied.

The reducing gas (hydrogen) included in the gas that has flowed in the outer reaction space 16 through the gas outflow port 12 is flammable gas, and reacts with oxygen (undergoes combustion) due to thermal energy supplied from the heat wall 7, so that hydrogen and oxygen are converted into water.

2H₂+O₂ → 2H₂O

In a case where hydrocarbon is used as the reducing gas, hydrocarbon and oxygen are converted into water and carbon dioxide.

Heat from combustion of hydrogen in the outer reaction space 16 is utilized to heat the heat wall 7 of the inner reactor 4. Thus, energy (electric power) required for the heating mechanism for heating the heat wall 7 decreases, which can contribute to energy saving.

Gas subjected to purification treatment in the outer reactor 5 is discharged to the outside of the outer reactor 5 via a gas discharge port 11 (purified gas discharge port).

The high-temperature gas discharged through the gas discharge port 11 may be used to heat the treatment-subject gas introduced into the inner reactor 4 through the gas introduction port 10.

For this purpose, a heat exchanger (not shown) may be provided between the introduction pipe 50 connected to the gas introduction port 10 and the discharge pipe 51 connected to the gas discharge port 11. The discharged thermal energy can be effectively utilized, and further, energy saving can be achieved in the gas abatement apparatus 1.

In particular, in the example shown in FIG. 1, the treatment-subject gas is introduced into the inner reaction space 6 through the gas introduction port 10 located on one end (first end portion) side of the heat wall 7, then flows into the outer reaction space 16 from the other end (second end portion) side of the heat wall 7, and flows along the longitudinal direction of the heat wall 7. Then, the gas is discharged through the gas discharge port 11, located on the first end portion side, of the outer reactor 5.

Thus, the gas introduction port 10 and the gas discharge port 11 are configured to be located on the first end portion of the heat wall 7 and to be adjacent to each other, so that the heat exchange between the gas introduction port 10 and the gas discharge port 11 is facilitated.

The gas subjected to reduction and oxidation (combustion) treatment by the gas abatement apparatus 1 is introduced into the outlet scrubber 3 through an inflow port 30. In the example shown in FIG. 1, the space between the chemical liquid surface of the chemical liquid tank 40 and the ceiling surface of the chemical liquid tank 40 is utilized as a passage (outflow passage FPo) from the gas abatement apparatus 1 (outer reactor 5) to the outlet scrubber 3.

In the example shown in FIG. 1, the inlet scrubber 2 and the outlet scrubber 3 share one chemical liquid tank 40. Thus, the outflow passage FPo and the inflow passage FPi are separated by the partition wall 42. As a result, untreated gas and gas after being treated by the gas abatement apparatus 1 are prevented from being mixed.

To ensure communication between the gas discharge port 11 and the inflow port 30 of the outlet scrubber 3, a pipe through which gas flows may be separately provided.

Separate chemical liquid tanks may be provided to the inlet scrubber 2 and the outlet scrubber 3 without sharing the chemical liquid tank 40.

As shown in FIG. 1, the outlet scrubber 3 communicating with the outer reactor 5 includes a straight-tube type outlet scrubber body 31 and a nozzle 32 for discharging a liquid.

A chemical liquid such as water is discharged from the nozzle 32, whereby the gas introduced in the outlet scrubber body 31 through the inflow port 30 is cooled, and dust, water-soluble components, and the like are eliminated from the gas.

The discharged chemical liquid is collected in the chemical liquid tank 40.

FIG. 1 shows an example in which a new chemical liquid (water or the like) is supplied from a supply source (not shown), but the chemical liquid collected in the chemical liquid tank 40 may be circulated by a pump as in the inlet scrubber 2.

The outlet scrubber body 31 may include a dilution port 33 that is a passage for introducing dry air (represented by DA in FIG. 1) for dilution, above the nozzle 32.

An exhaust fan 34 is provided on a top outlet of the outlet scrubber body 31, and the exhaust fan 34 allows the treated exhaust gas to be discharged to the atmosphere.

As described above, the gas abatement apparatus 1 includes two kinds of reactors having functions different from each other, that is, the inner reactor 4 for a reduction reaction and the outer reactor 5 for an oxidation reaction, and the inner reactor 4 is provided inside the outer reactor 5. The heat wall 7 of the inner reactor 4 surrounds the periphery of the inner reaction space 6, and heats the inner reaction space 6.

The outer reaction space 16 is configured to surround the periphery of the heat wall 7. That is, the outer reaction space 16 houses the heat wall 7 and is heated by the heat wall 7. Meanwhile, the outer reaction space 16 heats the heat wall 7 by utilizing heat generated through an oxidation reaction in the outer reaction space 16. As a result, energy consumption required for heating of the heat wall 7 can be reduced.

As described above, in the outer reaction space 16, the reducing gas required for a reduction reaction in the inner reactor 4 can be effectively utilized. In addition, a processing device for the reducing gas need not be separately provided, and the effect of reducing the area occupied by the gas abatement apparatus 1 can also be obtained.

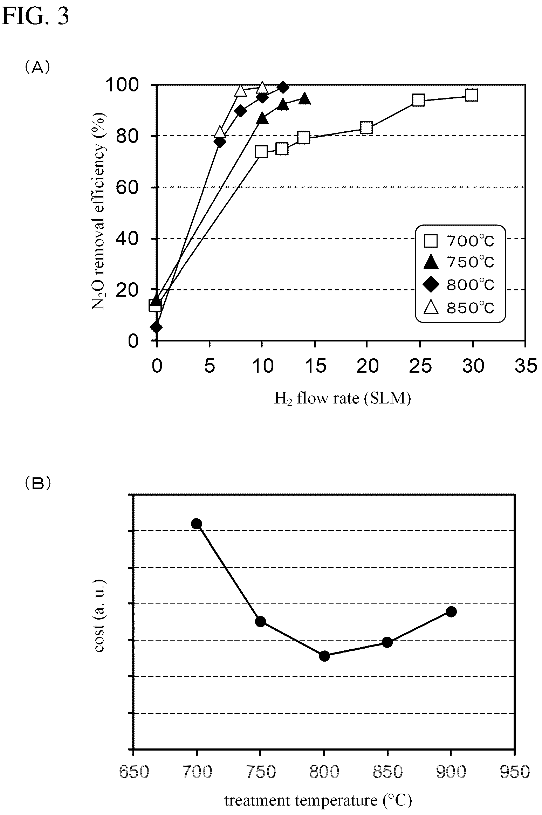

FIG. 3(A) is a graph showing the relationship between N₂O removal efficiency and the flow rate of hydrogen introduced in the inner reactor 4, at a treatment temperature of 700°C to 850°C in the inner reactor 4. The vertical axis represents N₂O removal efficiency (%), and the horizontal axis represents the flow rate of hydrogen (SLM). In FIG. 3(A), □ (white square) represents data obtained at a temperature of 700°C, A (black triangle) represents data obtained at a temperature of 750°C, ◆ (black diamond) represents data obtained at a temperature of 800°C, and Δ (while triangle) represents data obtained at a temperature of 850°C. Each removal efficiency was examined under a condition that the flow rate of N₂O was 7 (SLM).

FIG. 3(B) is a graph showing the relationship between cost required for exhaust gas treatment and treatment temperature in the gas abatement apparatus 1. The vertical axis represents a calculated value for cost (arbitrary unit), and the horizontal axis represents treatment temperature (°C).

As shown in FIG. 3(A), as the flow rate of hydrogen is increased, the N₂O removal efficiency is increased. In addition, the N₂O removal efficiency tends to decrease as the treatment temperature is lowered. However, the N₂O removal efficiency can be improved by increasing the flow rate of hydrogen.

When the treatment temperature is 850°C to 750°C, high N₂O removal efficiency can be obtained. Even if the treatment temperature is lowered to 700°C, high N₂O removal efficiency can be obtained by further increasing the flow rate of hydrogen. However, when the treatment temperature is 700°C, a required amount of hydrogen tends to be significantly increased.

In the above-described examination, it could be confirmed that, although a large amount of N₂O was treated, the concentration of NOₓ discharged from the gas abatement apparatus 1 was restrained to about 200 ppm. Furthermore, as necessary, in order to meet emission standards (e.g., 100 ppm or higher, and lower than 150 ppm) corresponding to a target facility, dilution can also be easily performed using air supplied through the dilution port 33.

In general, if N₂O is thermally decomposed simply, NOₓ of several thousands of ppm is generated. Thus, it is difficult to realize high-efficient N₂O removal while suppressing generation of NOₓ. However, as described above, it can be understood that the concentration of NOₓ discharged from the gas abatement apparatus 1 is restrained to about 200 ppm or lower which is a very low concentration. That is, the gas abatement apparatus 1 can achieve both high N₂O removal efficiency and reduction in generation of NOₓ, which is generally difficult. Furthermore, it can be understood that the gas abatement apparatus 1 is an excellent abatement apparatus that also allows the treatment temperature to be lowered and that can achieve both high N₂O removal efficiency and reduction in generation of NOₓ in a wide temperature range.

The flammable gas (hydrogen) that is the excess of the reducing gas is consumed through combustion, and thus emission standards can be met.

FIG. 3(B) shows the relationship between cost (calculated value) and treatment temperature. As shown in FIG. 3(B), the cost is minimized under a condition that the treatment temperature is 800°C.

When the treatment temperature becomes lower, a required amount of hydrogen is increased. Thus, the cost for hydrogen gas is increased, and particularly, the cost for hydrogen gas tends to be greatly increased at a temperature of 700°C. Meanwhile, when the treatment temperature becomes higher, energy (amount of electric power) required for heating is increased. From the viewpoint of the cost shown in FIG. 3(B), a temperature of 800°C is optimum.

As described above, with the gas abatement apparatus 1, the treatment temperature can also be lowered, so that the applicable temperature range is widened, and the selection range of parts designed for heat resistance is also widened. The lowered temperature allows cooling time during maintenance to be shortened, so that maintainability is also improved.

If it is desired to reduce the amount of hydrogen used, a high treatment temperature may also be selected.

An optimal treatment temperature can be applied by comprehensively considering the concentration of nitrogen oxides in an abatement-treatment-target gas, the maintainability and the operational management of the gas abatement apparatus 1, the heat resistance and the durability of parts to be used, etc. As described above, the range of operational conditions for the gas abatement apparatus 1, which can accommodate user requests, is expanded.

### (Abatement method for treatment-subject gas)

An abatement method for nitrogen oxides (N₂O) using the gas abatement system 100 that includes the gas abatement apparatus 1 having the above-described configuration, includes the following steps.

Step 0: The heat wall 7 that is a heating mechanism is controlled so as to set and maintain the temperature of the inner reaction space 6 at a predetermined temperature, for example, 800°C. At this time, the outer reaction space 16 is also heated and maintained at the predetermined temperature.

This step 0 is one of steps of starting up the gas abatement apparatus 1.

Step 1: Treatment-subject gas (exhaust gas) is introduced into the inlet scrubber 2, and dust, water-soluble components, and the like included in the treatment-subject gas are eliminated.

Step 2: The treatment-subject gas is introduced into the inner reactor 4.

Step 3: A reducing agent and the treatment-subject gas introduced in the inner reactor 4 are mixed in the inner reactor 4 (inner reaction space 6) (become a mixed gas), and the treatment-subject gas is reduced by the reducing agent (reducing gas). In more detail, reducing the treatment-subject gas means that an abatement-target component (in this case, nitrogen oxides) in the treatment-subject gas is reduced.

Step 4: The mixed gas (the exhaust gas subjected to reduction treatment and an excess of the reducing agent) treated in the inner reactor 4 is discharged to the outer reactor 5.

Step 5: Oxygen (air) introduced in the outer reactor 5 (outer reaction space 16) is reacted with the excess of the reducing agent included in the treated mixed gas that has flowed out from the inner reactor 4 (inner reaction space 6), that is, the reducing agent that has not been consumed through a reduction reaction of nitrogen oxides, so that the excess of the reducing agent is combusted. The heat wall 7 is heated by heat from the combustion.

Step 6: The gas (mixed gas) treated in the outer reactor 5 is discharged (to the outlet scrubber 3).

Step 7: The gas treated in the outer reactor 5 is cooled in the outlet scrubber 3, and is diluted as necessary.

Step 8: The gas treated in the outlet scrubber 3 is discharged to the atmosphere.

Among the above-described steps, treatment steps for the treatment-subject gas in the gas abatement apparatus 1 are steps 2 to 6.

In step 3, the gas flow regulator 13 installed in the inner reactor 4 promotes mixing of the exhaust gas and the reducing agent, causes the mixed gas to stay in the inner reaction space 6 for a longer time, and exhibits an effect of promoting a reduction reaction.

### (Embodiment 2)

Hereinafter, an embodiment of a gas abatement apparatus 1 in which a reducing gas (hydrogen or the like) as a reducing agent is not used will be described.

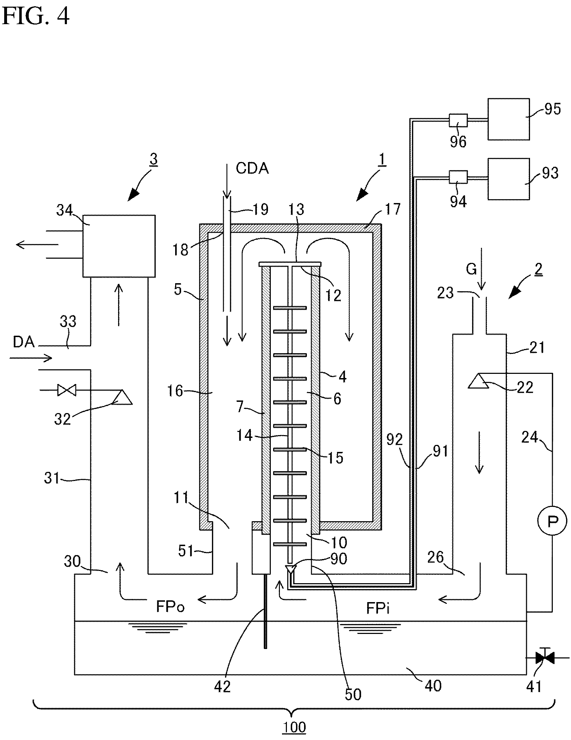

FIG. 4 schematically shows a main configuration of a gas abatement system 100. In particular, FIG. 4 is different from FIG. 1 in a point that, instead of the pipe 9 for supplying the reducing gas in the gas abatement apparatus 1, a supply line for an organic solvent (e.g., alcohol such as isopropyl alcohol (IPA)) is provided.

Hereinafter, the difference from embodiment 1 will be described in detail.

A flammable organic solvent is supplied to the inner reactor 4 through a discharging portion 90 provided at the gas introduction port 10. As the reducing agent (reducing substance), a liquid organic solvent is used, and thus a two-fluid nozzle can be used suitably as the discharging portion 90, for example.

A pipe 91 (organic solvent supply line) for supplying the organic solvent, and a pipe 92 (carrier gas supply line) for supplying carrier gas, for example, nitrogen or argon, for the organic solvent are connected to the discharging portion 90.

The organic solvent as the reducing agent is flammable.

The organic solvent is delivered to the discharging portion 90 through the pipe 91 from an organic solvent container (tank) 93 by a pump or the like (not shown). A flow rate controller 94 is mounted to the pipe 91, and the flow rate of the organic solvent is controlled such that a predetermined flow rate is maintained.

Carrier gas is delivered to the discharging portion 90 through the pipe 92 from a cylinder 95 (gas container). A flow rate controller 96 is mounted to the pipe 92, and the flow rate of the carrier gas is controlled such that a predetermined flow rate is maintained.

The organic solvent supplied to the discharging portion 90 is discharged to the inner reaction space 6 via the gas introduction port 10, together with the carrier gas.

As the discharging portion 90, the two-fluid nozzle can be suitably used. The organic solvent supplied to the two-fluid nozzle as the discharging portion 90 is mixed with the carrier gas, and is transferred to the inner reaction space 6 of the inner reactor 4 by the carrier gas.

The organic solvent and the carrier gas may be mixed, and this mixed gas may be transferred to the discharging portion 90 through one pipe, and may be discharged to the inner reaction space 6 through the discharging portion 90. However, control of the concentration of the organic solvent in the mixed gas is facilitated by using the two-fluid nozzle.

The means for supplying the organic solvent to the inner reactor 4 is not limited to the above, and any means may be used as long as the amount of the organic solvent supplied thereto can be controlled and the organic solvent can be introduced into the inner reaction space 6.

As a non-limiting example of the organic solvent, IPA that is used in various applications such as cleaning and drying in a manufacturing site and the like may be used. In addition, as the carrier gas, nitrogen that is inexpensive as inert gas may be suitably used. However, the present invention is not limited thereto.

In the inner reactor 4, nitrogen oxides mixed with the organic solvent are converted into nitrogen and water through the following reactions, for example.

Where the chemical formula of the organic solvent is CₓH_{y}O_{z}, the reaction equations are as follows.

N₂O+CₓH_{y}O_{z} → N₂+H₂O+CO₂

NO+CₓH_{y}O_{z} → N₂+H₂O+CO₂

NO₂+CₓH_{y}O_{z} → N₂+H₂O+CO₂

wherein, coefficients in each reaction equation are omitted.

For example, in a case where the organic solvent is IPA (C₃H₈O), the reaction equation with respect to N₂O is as follows.

9N₂O+C₃H₈O → 9N₂+4H₂O+3CO₂

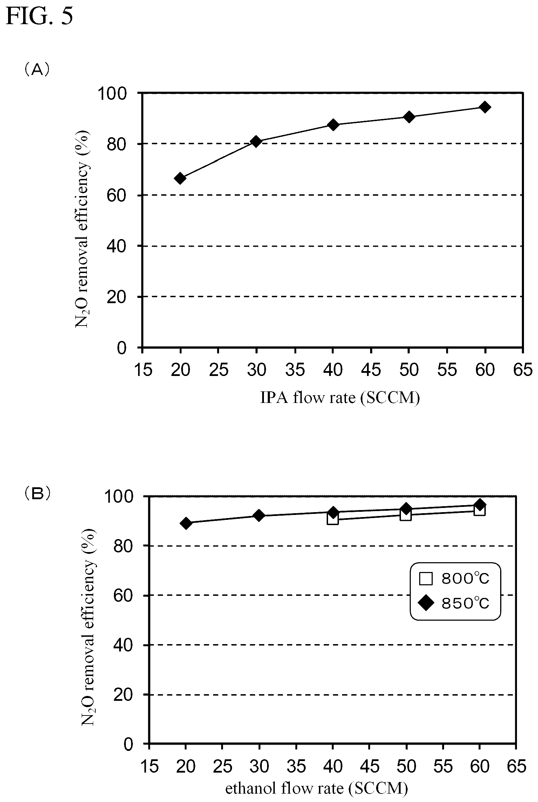

FIG. 5(A) is a graph showing the dependency of N₂O removal efficiency on a supply amount of IPA, and FIG. 5(B) is a graph showing the dependency of N₂O removal efficiency on a supply amount of anhydrous ethanol. In FIG. 5(A), the vertical axis represents N₂O removal efficiency, and the horizontal axis represents the flow rate of IPA. In FIG. 5(B), the vertical axis represents N₂O removal efficiency, and the horizontal axis represents the flow rate of ethanol. The flow rate of N₂O was set to 7 (SLM), and experiments were performed. In FIG. 5(A), ◆ (black diamond) represents data obtained through examination at a treatment temperature of 850°C, and in FIG. 5(B), □ (white square) represents data obtained through examination at a treatment temperature of 800°C, and **◆** (black diamond) represents data obtained through examination at a treatment temperature of 850°C. However, the treatment temperature is not limited to these temperatures.

As shown in FIG. 5(A), it can be understood that as the flow rate of IPA is increased, the removal efficiency is increased, and that a high removal efficiency of 90% or more can be achieved.

As shown in FIG. 5(B), it can be understood that as the flow rate of ethanol is increased, the removal efficiency is increased, and that a high removal efficiency of 90% or more can be achieved, similarly to IPA. In comparison between the removal efficiency at a treatment temperature of 800°C and the removal efficiency at a treatment temperature of 850°C, it can be understood that the removal efficiency at a treatment temperature of 850°C tends to show a greater value, but that there is not a substantially great difference between the removal efficiencies and the dependency on temperature is small.

As described above, it can be understood that, even when the organic solvent is used as the reducing agent, a high N₂O removal efficiency can be achieved, and that the treatment temperature can be lowered to about 800°C.

In addition, it was confirmed that, although a large amount of N₂O was treated, the concentration of NOₓ discharged from the gas abatement apparatus 1 was restrained to a low concentration of about 200 ppm under all treatment conditions, and that both high N₂O removal efficiency and reduction in generation of NOₓ were also able to be achieved.

Therefore, it can be understood that the gas abatement apparatus 1 in which the organic solvent is used as the reducing agent is an excellent abatement apparatus that achieves both high N₂O removal efficiency and reduction in generation of NOₓ and that allows the treatment temperature to be lowered to about 800°C.

As in embodiment 1, the organic solvent that is an excess of the reducing agent can be combusted in the outer reactor 5, and the thermal energy generated through the combustion can be utilized as energy required for a reduction reaction in the inner reactor 4, which contributes to reduction in energy consumption.

As described above, the organic solvent can be used as the reducing agent, and the gas abatement apparatus 1 of the present embodiment can be used in a case where the use of flammable gas such as hydrogen is not desired.

The gas abatement apparatus 1 of embodiment 2 has a main configuration similar to that of the gas abatement apparatus 1 of embodiment 1, and can easily accommodate various user requests by changing the design of a supply system for the reducing agent.

With embodiment 2, a configuration in which flammable high-pressure gas such as hydrogen is not used can be provided, and thus the flexibility in selecting the layout of the gas abatement apparatus 1 is increased, for example.

The gas abatement apparatus 1 of embodiment 1 or the gas abatement apparatus 1 of embodiment 2 may be selected based on the installation location, the frequency of use, safety management method, cost, and the like of the gas abatement apparatus 1.

That is, the range of available options can be expanded, based on each operational condition for users.

### (Embodiment 3)

In embodiments 1 and 2, as examples, the abatement-target component in the treatment-subject gas is nitrogen oxides, but the present invention is not limited thereto.

Hereinafter, an example in which the abatement-target component in the treatment-subject gas is NF₃, which is a nitrogen compound, in the gas abatement apparatus 1 will be described.

In the inner reactor 4, the nitrogen compound (NF₃), after being mixed with the reducing agent, can be thermally decomposed and abated.

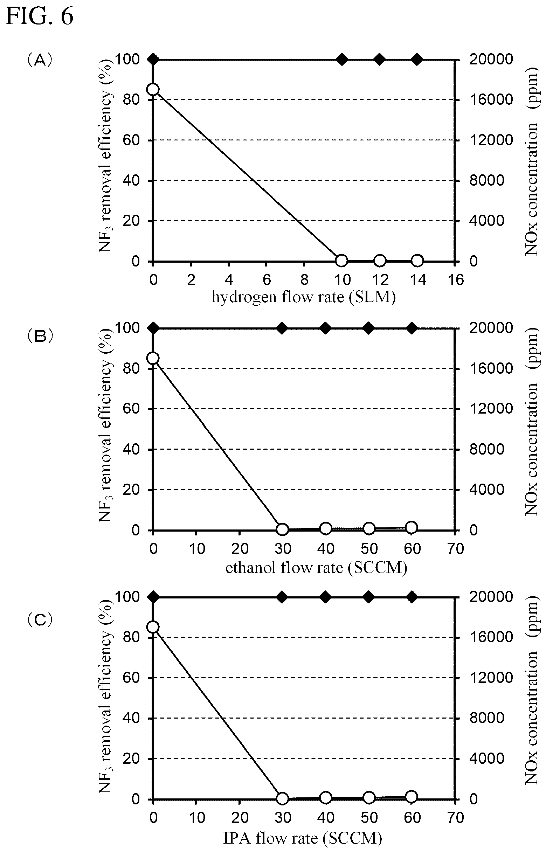

FIG. 6(A) shows the dependency of NF₃ removal efficiency on the flow rate of hydrogen, FIG. 6(B) shows the dependency of NF₃ removal efficiency on the flow rate of ethanol, and FIG. 6(C) shows the dependency of NF₃ removal efficiency on the flow rate of isopropyl alcohol (IPA). In FIG. 6, the concentration of NOₓ discharged from the gas abatement apparatus 1 is also shown. The vertical axis (left) represents NF₃ removal efficiency (%), and the vertical axis (right) represents the concentration of NOₓ (ppm). The horizontal axis in FIG. 6(A) represents the flow rate of hydrogen (SLM), the horizontal axis in FIG. 6(B) represents the flow rate of ethanol (SCCM), and the horizontal axis in FIG. 6(C) represents the flow rate of IPA (SCCM). In FIG. 6, ◆ (black diamond) represents removal efficiency, and ∘ (white circle) represents the concentration of NOₓ. Examinations were performed under a condition that the flow rate of NF₃ was 5 (SLM) and the treatment temperature was 800°C

As shown in FIG. 6, it can be understood that high NF₃ removal efficiency (about 100%) can be obtained without the reducing agent (hydrogen, ethanol, IPA), but NOx has been generated at a high concentration.

However, it can be understood that introduction of the reducing agent can greatly reduce the concentration of NOₓ.

It can be understood that the introduction of the reducing agent can reduce the concentration of NOₓ discharged from the gas abatement apparatus 1 to about 200 (ppm) or less. That is, it can be understood that when a nitrogen compound (NF₃) is thermally decomposed, the nitrogen compound (NF₃) reacts with water (water vapor) that has accumulated in the chemical liquid tank and NOₓ is generated at a high concentration, but that the introduction of the reducing agent into the inner reactor 4 can significantly reduce generation of NOₓ.

In addition, it is understood that the acceptable range of the flow rate of the reducing agent is also wide and stability is high.

The excess of the reducing agent is combusted in the outer reactor 5.

As described above, the gas abatement apparatus 1 can perform abatement treatment on gas including a nitrogen compound as the abatement-target component, while restraining NOₓ emissions.

### Industrial Applicability

The gas abatement apparatus 1 according to the present invention includes the inner reactor 4 for mixing gas including, as an abatement-target component, nitrous oxide and the like which are nitrogen compounds, with a reducing agent, to abate the gas through thermal decomposition, and the outer reactor 5 for abating an excess of the reducing agent through combustion. The heat from combustion in the outer reactor 5 can be recovered, and can be reutilized as energy required for a reduction reaction in the inner reactor 4, and thus energy saving is possible.

The treatment temperature range can be expanded to the lower temperature side using hydrogen as the reducing agent.

In addition, the configuration of an introduction portion for the reducing agent may also be changed based on the form (gas or liquid) of the reducing agent, whereby it is also possible to contribute to expanding the range of the locations where the gas abatement apparatus 1 can be installed, for example.

As compared with conventional apparatuses, an available range of the gas abatement apparatus 1 can be expanded based on various user requests, and industrial applicability is high.

### Reference Signs List

- 100: gas abatement system
- 1: gas abatement apparatus
- 2: inlet scrubber
- 3: outlet scrubber
- 4: inner reactor (first reactor)
- 5: outer reactor (second reactor)
- 6: inner reaction space (first reaction space)
- 7: heat wall (reaction wall)
- 8: reducing gas supply port (gas supply port)
- 9: pipe (reducing gas supply line)
- 10: gas introduction port (treatment-subject gas introduction port)
- 11: gas discharge port (purified gas discharge port)
- 12: gas outflow port
- 13: gas flow regulator
- 14: support portion
- 14a: head portion
- 14b: shaft portion
- 15: gas-flow control portion
- 16: outer reaction space (second reaction space)
- 17: heat-insulating wall
- 18: intake port
- 19: pipe
- 21: inlet scrubber body
- 22: nozzle
- 23: gas inflow port
- 24: circulation pipe
- 26: gas outflow port
- 30: inflow port
- 31: outlet scrubber body
- 32: nozzle
- 33: dilution port
- 34: exhaust fan
- 40: chemical liquid tank
- 41: drain valve
- 50: pipe (introduction pipe)
- 51: discharge pipe
- 90: discharging portion
- 91: pipe (organic solvent supply line)
- 92: pipe (carrier gas supply line)
- 93: organic solvent container (tank)
- 94: flow rate controller
- 95: cylinder (gas bottle)
- FPi: inflow passage
- FPo: outflow passage
- FCD: flow rate control device
- P: pump

## Claims

1. A gas abatement apparatus (1) comprising: a first reactor (4); and a second reactor (5), wherein
the first reactor (4) includes a first reaction space (6) surrounded by a heat wall (7),
the second reactor (5) includes a second reaction space (16) surrounding the heat wall (7),
the gas and a reducing agent are introduced from one end side of the first reaction space (6),
another end side of the first reaction space (6) communicates with the second reaction space (16), and
oxygen or a gas including oxygen is introduced into the second reaction space (16).

2. The gas abatement apparatus (1) according to claim 1, wherein the first reactor (4) includes a gas flow regulator (13) in the first reaction space (6).

3. The gas abatement apparatus (1) according to claim 2, wherein
the heat wall (7) has a straight-tube shape,
the gas flow regulator (13) includes a gas-flow control portion (15), and
the gas-flow control portion (15) is installed such that a longitudinal direction of the gas-flow control portion (15) is parallel to a longitudinal direction of the heat wall (7).

4. The gas abatement apparatus (1) according to any one of claims 1 to 3, wherein the reducing agent is flammable gas.

5. The gas abatement apparatus (1) according to any one of claims 1 to 3, wherein the reducing agent is an organic solvent.

6. A gas abatement system (100) comprising: the gas abatement apparatus (1) according to any one of claims 1 to 3; an inlet scrubber (2); and an outlet scrubber (3), wherein
the inlet scrubber (2) communicates with the first reactor (4), and
the outlet scrubber (3) communicates with the second reactor (5).

7. A treatment method for gas containing nitrous oxide by using the gas abatement apparatus (1) according to claim 1, the treatment method comprising:
a gas introduction step of introducing the gas into the first reactor (4);
a reduction step of mixing the reducing agent and the gas introduced in the first reactor (4), and reducing the gas;
a combustion step of introducing the gas subjected to the reduction step and an excess of the reducing agent into the second reactor (5), and reacting oxygen and the excess of the reducing agent introduced in the second reactor (5); and
a discharge step of discharging the gas subjected to the combustion step from the second reactor (5).
